# EUROPEAN PATENT APPLICATION

(11) **EP 4 265 698 A1**
(43) Date of publication of application: **25.10.2023**
(21) Application number: 21911418.8
(22) Date of filing: 17.12.2021
(51) Int. Cl.: C09J 7/50, C09J 7/28, C09J 175/04, C09J 11/00, C09J 5/06, C08K 5/5415, C09D 1/00, B32B 15/01, B32B 37/12

(54) **ELECTRICAL STEEL SHEET AND LAMINATE THEREOF**

(30) Priority: 21.12.2020 KR 20200180151
(71) Applicant: POSCO Co., Ltd, Pohang-si, Gyeongsangbuk-do 37859 (KR)
(72) Inventor: LEE, Donggyu, Pohang-si, Gyeongsangbuk-do 37859 (KR); KIM, Jungwoo, Pohang-si, Gyeongsangbuk-do 37859 (KR); HA, Bongwoo, Pohang-si, Gyeongsangbuk-do 37859 (KR); NO, Taeyoung, Pohang-si, Gyeongsangbuk-do 37859 (KR); PARK, Gyeongryeol, Pohang-si, Gyeongsangbuk-do 37859 (KR)
(74) Representative: Meissner Bolte Partnerschaft mbB
(86) International application number: PCT/KR2021/019319
(87) International publication number: WO 2022/139351

(57) **Abstract**

The present invention relates to: an electrical steel sheet including: an electrical steel sheet; and a bonding coating layer positioned on the electrical steel sheet, and further including: a first interface layer positioned in the electrical steel sheet and brought into contact with the bonding coating layer; and a second interface layer positioned in the bonding coating layer and brought into contact with the first interface layer, in which 70 mol% or more of total Si content in the bonding coating layer including the second interface layer is present in the second interface layer.

## Description

### [Technical Field]

An exemplary embodiment of the present invention relates to an electrical steel sheet and a laminate thereof. More specifically, an exemplary embodiment of the present invention relates to an electrical steel sheet for bonding and a laminate thereof.

### [Background Art]

A non-oriented electrical steel sheet is a steel sheet with uniform magnetic properties in all directions on a rolled sheet, and is widely used in motors, generator iron cores, electric motors, small transformers, and the like.

Electrical steel sheets may be divided into two types of those which need to be subjected to stress relief annealing (SRA) in order to improve magnetic properties after a blanking processing and those in which stress relief annealing is omitted when the cost loss due to heat treatment is greater than the magnetic property effect due to stress relief annealing.

Insulation coatings are typically required to have electrical properties that suppress the generation of eddy current as coatings coated in the finishing manufacturing process of laminates such as motors, generator iron cores, electric motors, and small transformers. In addition, insulation coatings are required to have continuous blanking workability, adhesion resistance, surface adhesion, and the like. Continuous blanking workability means the ability to suppress abrasion of a die when laminating a large number of sheets after blanking processing into a predetermined shape to form an iron core. Adhesion resistance means the ability of the iron core steel sheets not to adhere to each other after the stress relief annealing process which restores magnetic properties by removing the working stress of the steel sheets.

In addition to these basic properties, excellent application workability of a coating solution and solution stability that can be used for a long time after blending are also required. These insulation coatings can be prepared as electrical steel sheet laminates only when separate fastening methods such as welding, clamping, and interlocking are used.

### [Disclosure]

### [Technical Problem]

An exemplary embodiment of the present invention provides an electrical steel sheet on which a staked layer is formed and a laminate thereof, which can bond (fasten) the electrical steel sheet without using existing fastening methods such as welding, clamping, and interlocking. Specifically, an exemplary embodiment of the present invention is intended to provide an electrical steel sheet with improved adhesive strength by controlling the interfacial properties of a staked layer formed between the electrical steel sheets.

### [Technical Solution]

The present invention provides an electrical steel sheet including: an electrical steel sheet; and a bonding coating layer positioned on the electrical steel sheet, and further including: a first interfacial layer positioned in the electrical steel sheet and brought into contact with the bonding coating layer; and a second interfacial layer positioned in the bonding coating layer and brought into contact with the first interfacial layer, in which 70 mol% or more of total Si content in the bonding coating layer including the second interfacial layer is present in the second interfacial layer.

Further, the present invention provides a laminate including: a plurality of electrical steel sheets; and a bonding layer positioned between the plurality of electrical steel sheets, and further including: a first interfacial layer positioned in the electrical steel sheet and brought into contact with the bonding layer; and a second interfacial layer positioned in the bonding layer and brought into contact with the first interfacial layer, in which 70 mol% or more of total Si content in the bonding layer including the second interfacial layer is present in the second interfacial layer.

### [Advantageous Effects]

According to an exemplary embodiment of the present invention, electrical steel sheets can be bonded without using existing fastening methods such as welding, clamping, and interlocking.

According to an exemplary embodiment of the present invention, it is possible to provide an adhesive coating composition for electrical steel sheets that is excellent in noise characteristics, vibration characteristics, tensile strength, coating film adhesion, peeling characteristics, and the like.

### [Description of the Drawings]

FIG. 1 is a schematic view of an electrical steel sheet in which a bonding layer according to an exemplary embodiment of the present invention is formed.
FIG. 2 is a schematic view of an electrical steel sheet laminate according to an exemplary embodiment of the present invention.

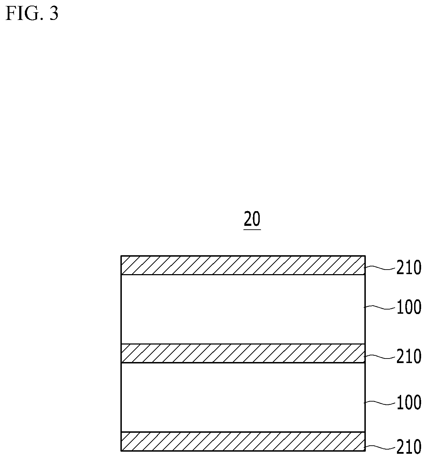

FIG. 3 is a schematic cross-sectional view of an electrical steel sheet laminate according to an exemplary embodiment of the present invention.

### [Mode for Invention]

Hereinafter, exemplary embodiments of the present invention will be described in detail. However, the exemplary embodiments are suggested as an example, the present invention is not limited thereby, and the present invention is defined only by the scope of the claims to be described below.

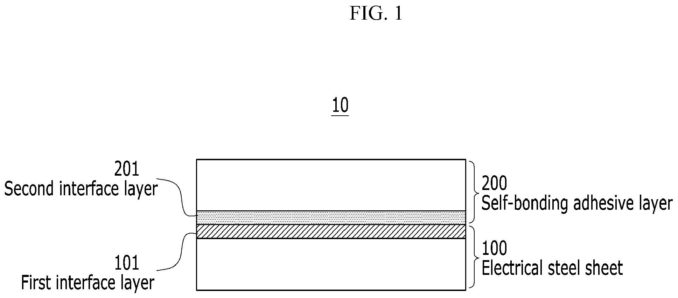

The electrical steel sheet 10 of FIG. 1 according to an exemplary embodiment of the present invention includes an electrical steel sheet 100; and a bonding coating layer 200 positioned on the electrical steel sheet.

The bonding coating layer of the present invention is a coating layer capable of bonding the surfaces of two or more steel sheets, and the use thereof is not particularly limited, but may be, for example, a self-bonding coating layer for electrical steel sheets for providing self-bonding of electrical steel sheets. In addition, the electrical steel sheet of the present invention may be an electrical steel sheet for self-bonding.

A bonding coating layer provided on one surface of an electrical steel sheet has special interface properties when applied to the electrical steel sheet and formed as a coating layer. More specifically, the interface may be examined separately as the interface on the electrical steel sheet side and the interface on the bonding coating layer side. That is, the interface may be examined separately as a first interface layer 101 positioned in the electrical steel sheet and brought into contact with the bonding coating layer; and a second interface layer 201 positioned in the bonding coating layer and brought into contact with the first interface layer.

70 mol% or more of total Si content in a bonding coating layer 200 including the second interface layer is present in the second interface layer. Specifically, total Si may be present in an amount of 70 mol% or more and 100 mol% or less, or 80 mol% or more and 95 mol% or less, or 85 mol% or more and 90 mol% or less. That is, a portion containing most of Si in the bonding coating layer 200 may be called the second interface layer 201. Furthermore, since the Si content in the second interface layer is high, most of the Si-N bonds in the bond coating layer may be included in the second interface layer. The Si-N bond in the bonding coating layer is generated by reaction between the Si component of the first interface layer and the bonding coating layer, of the electrical steel sheet. That is, part of the Si in the electrical steel sheet migrates to the bonding coating layer to be bonded to N. When this Si-N bond is mainly present in the second interface layer, the adhesive strength between the bonding coating layer and the electrical steel sheet becomes excellent.

Further, the content of Si in the second interface layer 201 may be 10 mol% or more of the total Si content of the first interface layer and the second interface layer. Specifically, the content may be 20 mol% or more and 55 mol% or less, or 40 mol% or more and 53 mol% or less of the total Si content of the first interface layer and the second interface layer. That is, the Si component of the first interface layer reacts with the bonding coating layer, so that Si in the first interface layer and the electrical steel sheet migrates to the second interface layer.

The first interface layer 101 present in the electrical steel sheet 100 may include 90 wt% to 97 wt% of Fe oxides, 3 wt% to 6 wt% of Si oxides, and 1 wt% to 4 wt% of segregation elements.

The Fe oxide content in the first interface layer may be reduced by 1 wt% to 3 wt% compared to the content before the bonding coating layer is formed. In addition, the Si oxide content in the first interface layer may be reduced by 0.5 wt% to 1 wt% compared to the content before the bonding coating layer is formed. The segregation element content in the first interface layer may be reduced by 0.5 wt% to 1 wt% compared to the content before the bonding coating layer is formed. By controlling the reduction of the segregation elements in an appropriate range, the fastening force between the bonding coating layer and the steel sheet may be strengthened.

Such a bonding coating layer 200 may include an adhesive resin and a bonding additive.

The adhesive resin is a polyurethane formed by reacting a diisocyanate monomer and a polyol.

The bonding additive is one or more selected from the group consisting of a coupling agent, a wetting agent, a curing agent, and a curing catalyst.

The coupling agent may be included in an amount of 0.5 parts by weight or more and 5 parts by weight or less with respect to 100 parts by weight of the adhesive resin in the bonding coating layer. Specifically, the bonding coating layer may include 0.5 parts by weight or more and 3 parts by weight or less of the coupling agent with respect to 100 parts by weight of the adhesive resin. When the aminosilane is not added or is added too little during the formation of the bonding coating layer, the effect of improving the adhesion at the interface between the base iron and the bonding coating layer cannot be expected, so that there may be a problem in that peel adhesion and ATF resistance characteristics deteriorate. In contrast, when the aminosilane is excessively added, it may cause an aggregation phenomenon in the bonding layer and degrade mechanical properties such as tensile strength and elongation, thereby leading to a problem in that adhesion between the base iron and the bonding layer is not improved. Preferably, the content of aminosilane in the bonding coating layer for electrical steel sheets may be controlled within the above range.

The coupling agent may be a coupling agent including an aminosilane represented by the following Chemical Formula 1.

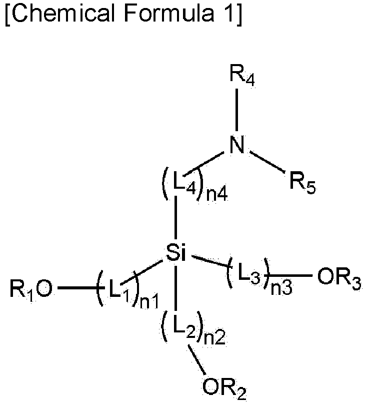

In Chemical Formula 1, R1 to R5 are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group, L1 to L4 are each independently a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and n1 to n4 are each independently any one integer from 0 to 10.

More specifically, the coupling agent may be a coupling agent including an aminosilane represented by the following Chemical Formula 1-2.

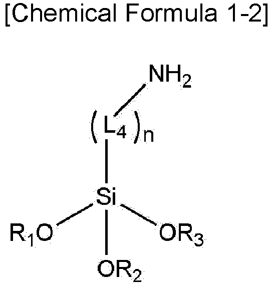

In Chemical Formula 1-2, R1 to R5 are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group, L4 is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and n is any one integer from 1 to 10.

Specifically, the aminosilane coupling agent may be 3-aminopropyl trimethoxysilane.

The diisocyanate monomer may include an aromatic diisocyanate monomer, an aliphatic diisocyanate monomer, or a mixture thereof. That is, the polyurethane resin included in the bonding coating layer 200 of an exemplary embodiment of the present invention may include an adhesive resin obtained by polymerizing an aromatic diisocyanate monomer, an aliphatic diisocyanate monomer, or a mixed monomer thereof.

The aromatic diisocyanate monomer is the following Chemical Formula 2, Chemical Formula 3, or a combination thereof.

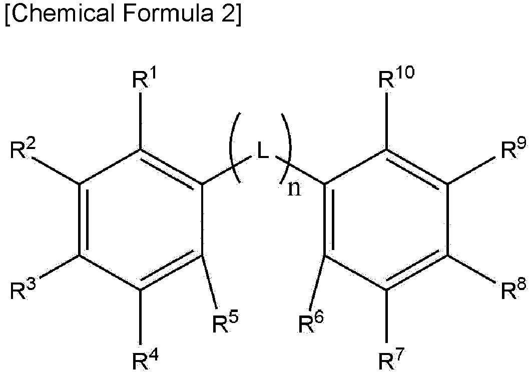

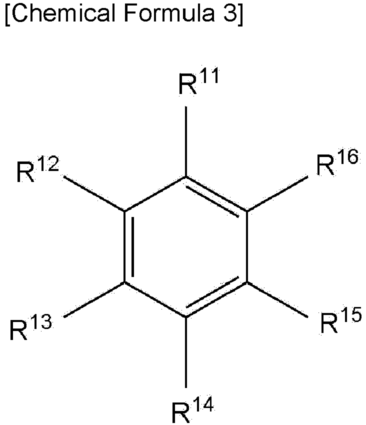

In Chemical Formula 2,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is an isocyanate, and any one of R⁶ to R¹⁰ is an isocyanate,
the case where both R³ and R⁸ are isocyanate is excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any one integer of 1 to 10,
in Chemical Formula 3,
R¹¹ to R¹⁶ are each independently hydrogen, deuterium, a substituted or unsubstituted C1 to C10 alkyl group, a substituted or unsubstituted C6 to C20 aryl group, or a substituted or unsubstituted C5 to C20 heteroaryl group, an isocyanate group or a substituted or unsubstituted C1 to C10 alkyl isocyanate group, and at least two of R¹¹ to R¹⁶ are an isocyanate or a substituted or unsubstituted C1 to C10 alkyl isocyanate.

In the monomer represented by Chemical Formula 1, any one of R¹ to R⁵ is an isocyanate, any one of R⁶ to R¹⁰ is an isocyanate, the case where both R³ and R⁸ are an isocyanate is excluded, and the case where both R¹ and R¹⁰ are an isocyanate may be further excluded.

In the monomer represented by Chemical Formula 1, it is possible to further exclude those in which any one of R¹ to R⁵ is an isocyanate, any one of R⁶ to R¹⁰ is an isocyanate, and any one of R¹ to R⁵ and any one of R⁶ to R¹⁰ are simultaneously an isocyanate symmetrically about L.

Specifically, the aromatic diisocyanate monomer may be a monomer which is the following Chemical Formulae 2-1 and 3-1, or a combination thereof.

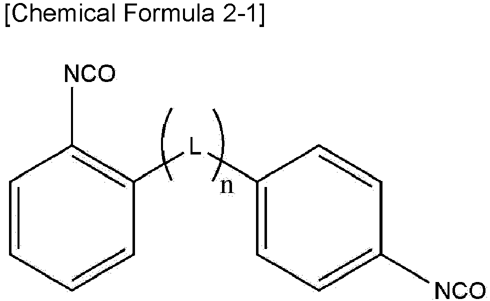

In Chemical Formula 2-1,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.

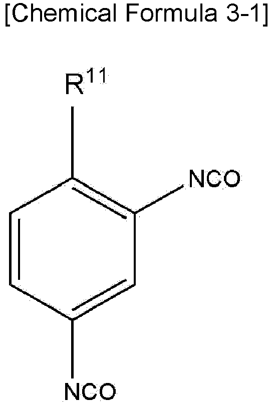

In Chemical Formula 3-1,
R¹¹ may be hydrogen, deuterium, a substituted or unsubstituted C1 to C10 alkyl group, a substituted or unsubstituted C6 to C20 aryl group, or a substituted or unsubstituted C5 to C20 heteroaryl group.

More specifically, as the aromatic diisocyanate monomer, it is possible to use one or more selected from the group consisting of 2,4-toluene diisocyanate, 2,6-toluene diisocyanate, p-phenylene diisocyanate, 2,2'-methylene diphenyl diisocyanate, 2,4'-methylene diphenyl diisocyanate, 4,4'-methylene diphenyl diisocyanate, and m-xylene diisocyanate.

The aliphatic diisocyanate monomer is the following Chemical Formula 4.

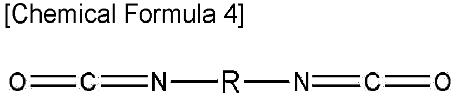

In Chemical Formula 4, R is a substituted or unsubstituted C1 to C10 alkyl group, or a substituted or unsubstituted C3 to C12 cycloalkyl group.

The aliphatic diisocyanate monomer includes one or more selected from the group consisting of hexamethylene diisocyanate (HDI), 1,4-cyclohexane diisocyanate, 4,4'-dicyclohexylmethane diisocyanate, isophorone diisocyanate and hydrogenated xylene diisocyanate.

The polyurethane may include 50 parts by weight or less of the aliphatic diisocyanate monomer with respect to the total 100 parts by weight of the diisocyanate monomer used during the polymerization.

The polyol may be a polyol represented by Chemical Formula 6.

[Chemical Formula 6] HO-R'-OH

In Chemical Formula 6, R' may be a substituted or unsubstituted C1 to C10 alkyl group, a substituted or unsubstituted C6 to C20 aryl group, or a substituted or unsubstituted C5 to C20 heteroaryl group.

The polyol may have a number average molecular weight of 400 g/mol to 1000 g/mol. Furthermore, the polyol may be polypropylene glycol).

The bonding coating layer may contain 90 wt% or more of the polyurethane resin. That is, the bonding coating layer of the present invention may include only polyurethane as an adhesive resin component.

The bonding coating layer may further include other bonding additive components which can be used in the bonding composition in addition to the polymer resin, which includes a polyurethane, and aminosilane.

The other bonding additive components are not limited as long as they are used in a general bonding coating layer, and may include, for example, a wetting agent, a curing agent, a curing catalyst, and the like.

Specifically, the wetting agent may include a silicone-based wetting agent. An example of a silicone-based wetting additive may be polyether-modified polydimethylsiloxane. The wetting agent may be added to the bonding coating layer to enhance the interfacial adhesion between the electrical steel sheet and the bonding layer.

Specifically, the curing agent may include aliphatic amine-based, aromatic amine-based, amino amine-based, or imidazole-based curing agents. More specifically, a dicyandiamide-based curing agent can be included.

Specifically, as the curing catalyst, an imidazole-based curing catalyst may be included.

The bonding coating layer 200 may further include 0.50 parts by weight to 2.50 parts by weight of a curing agent based on 100 parts by weight of the adhesive resin. Specifically, a curing agent may be further included in an amount of 0.90 parts by weight to 1.10 parts by weight. The curing agent serves to adjust the reactivity of the surface of the bonding coating layer. When the curing agent is included too little, the curing reaction of the bonding layer deteriorates, so that there may be a problem in that the stickiness of the surface of the bonding layer deteriorates. Conversely, when too much curing agent is added, the fastening force may deteriorate after low-temperature staking.

The bonding coating layer may further include 0.05 parts by weight to 0.50 parts by weight of a wetting agent based on 100 parts by weight of the adhesive resin. Specifically, a wetting agent may be further included in an amount of 0.09 parts by weight to 0.11 parts by weight.

The bonding coating layer may further include 0.10 parts by weight to 1.00 part by weight of a curing catalyst with respect to 100 parts by weight of the adhesive resin. Specifically, a curing catalyst may be further included in an amount of 0.40 parts by weight to 0.60 parts by weight.

As the electrical steel sheet 100 of an electrical steel sheet 10 for bonding according to an exemplary embodiment of the present invention, a general non-oriented or oriented electrical steel sheet can be used without limitation. In an exemplary embodiment of the present invention, it is the main configuration to manufacture an electrical steel sheet laminate 20 by forming a bonding coating layer 30 between a plurality of electrical steel sheets 100, so that a detailed description on the electrical steel sheet 10 is omitted.

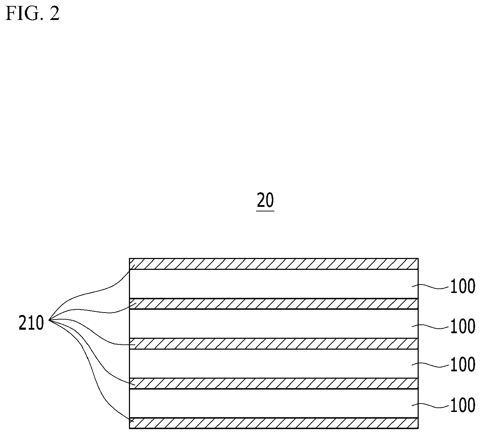

The laminate 20 of FIG. 2 according to an exemplary embodiment of the present disclosure includes a plurality of electrical steel sheets 100; and a bonding layer 210 positioned between the plurality of electrical steel sheets. The bonding layer 210 of the laminate 20 is obtained by heat-staking the bonding coating layer 200 applied on the electrical steel sheet 10 for bonding.

As with the electrical steel sheet 10, the bonding layer 210 provided on one surface of the electrical steel sheet 100 of the laminate 20 has special interface properties when applied to the electrical steel sheet and formed as a coating layer. The interface includes a first interface layer 101 positioned in the electrical steel sheet and brought into contact with the bonding layer; and a second interface layer 201 positioned in the bonding layer and brought into contact with the first interface layer.

70 mol% or more of total Si content in the bonding layer 210 including the second interface layer is present in the second interface layer, and the specific description on this is as described for the electrical steel sheet 10.

The bonding layer 210 may include an adhesive resin and a bonding additive, and the adhesive resin is polyurethane formed by reacting a diisocyanate monomer and a polymer. A detailed description on the bonding layer 210 is as described for the bonding coating layer 200 of the electrical steel sheet 10.

The bonding layer 210 of the electrical steel sheet laminate 20 may have a thickness of 0.1 µm to about 10 µm. When the thickness of the bonding layer is too small, the adhesive strength may sharply deteriorate, and when the thickness of the bonding layer is too large, a problem with stickiness may occur after coating winding

More specifically, the bonding layer may have a thickness of 2 µm to 5 µm.

A coupling agent, a wetting agent, a curing catalyst, a curing agent, and the like may remain in the bonding layer 210 of the electrical steel sheet laminate.

The electrical steel sheet laminate 20 may be a laminate obtained by forming a bonding coating layer simply using the above-described adhesive coating composition without using existing methods such as welding, clamping, and interlocking, and heat-staking different electrical steel sheets including a bonding coating layer.

The adhesive coating composition is coated on the surface of the electrical steel sheet 100 and cured to form an adhesive coating layer 200, and the adhesive coating layer 200 is laminated and heat-staked to form a bonding layer 210.

When a plurality of electrical steel sheets 100, in which a bonding coating layer 200 is formed, are laminated and heat-staked, a resin component in the bonding coating layer 200 is heat-staked to form a bonding layer 210, which is a polymer adhesive layer.

In the bonding layer 210, an inorganic metal compound is included in a main component of an organic material. An inorganic component can be uniformly dispersed in an organic material in the bonding layer to form a micro phase.

When a laminate 20 is constructed so as to satisfy these factors, it is possible to obtain a laminate (core) capable of satisfying all of the various characteristics currently required in the EV market.

Hereinafter, preferred Examples of the present invention and Comparative Examples will be described. However, the following Examples are only a preferred Example of the present invention, and the present invention is not limited to the following Examples.

### Preparation of polyurethane resin

An adhesive coating solution included a polyurethane obtained by including total two types of diisocyanate monomers of one aliphatic diisocyanate monomer and one aromatic diisocyanate monomer and reacting the diisocyanate monomers with a polyol. As the polyol, a polypropylene glycol)(PPG) having a number molecular weight of 425 g/mol was used.

The composition of the adhesive coating solution other than the polyurethane resin obtained above varied the type and content of the silane coupling agent as an additive as shown in Table 1 based on 100 parts by weight of the polyurethane resin. The adhesive coating solution also includes 0.1 parts by weight of a silicone wetting agent, 1 part by weight of a dicyandiamide curing agent and 0.5 parts by weight of an imidazole-based curing catalyst.

### Formation of bonding layer on surface of electrical steel sheet

A non-oriented electrical steel sheet (50 X 50 mm, 0.35 mmt) was prepared as an empty specimen. The adhesive coating solution was applied to the top and bottom of the empty specimen, each prepared to a certain thickness using a bar coater and a roll coater, cured at a sheet temperature standard of 150°C to 200°C for 20 seconds, and then slowly cooled in the air to form a bonding coating layer.

### Electrical steel sheet interfacial property analysis

In Examples 1 to 6, the component ratio and adhesion of the interface layer were confirmed using 3-aminopropyl trimethoxysilane as an aminosilane coupling agent including Si-N bonds, and in Comparative Examples 1 to 6, the component ratio and adhesion of the interface layer were confirmed with and without using other types of coupling agents. The coating thickness was set to 2 µm to 5 µm.

The peel adhesion (T-peel, N/mm) was measured as follows.

A specimen standard for T-peeloff measurement was produced in accordance with ISO 11339. A tensile specimen in the form of T was produced by adhering two specimens with 25 × 200 mm in an area of 25 × 150 mm², and then bending an unadhered part at 90°. After the specimen produced by the T-Peeloff was fixed to the upper/lower jig (JIG) with a predetermined force, the shear adhesive strength was measured using a device that measures the tensile force of a laminated sample while being pulled at a predetermined speed. In this case, in the case of the shear method, the measured value was measured at the point where the interface with the minimum adhesive strength fell off from the interface of the laminated samples. After maintaining the temperature of the specimen at 60°C through a heating device, the adhesive strength was measured.

The Si element is an average value obtained by randomly selecting 10 points at each position and measuring the content.

In this experimental example, the thickness of the first interface layer was 0.1 µm, and the thickness of the second interface layer was 0.1 µm.

**(Table 1)**

| | Main resin | | Silane coupling agent | | Electri cal steel sheet | Bonding coating layer | | avera ge coati ng thick ness (µm) | T-Pee I (Av g, N/m m) |
|---|---|---|---|---|---|---|---|---|---|
| | Type | Solid conte nt wt% comp ared to solve nt) | Type | Conte nt (wt% comp ared to main resin) | Si compo nent of first interfa ce layer (mol% ) | Si compo nent of secon d interfa ce layer (mol% ) | Si compo nent (mol% ) of remain ing bondin 9 layers exclud ing secon d interfa ce layer | | |
| exempl ary embodi ment1 | Polyure thane | 30 | 3-aminopropyl trimethoxysi lane | 0.5 | 1.3 | 1.0 | 0.1 | 2 | 2.5 |
| exempl ary embodi ment2 | | | | | 1.5 | 1.2 | 0.0 | 5 | 4.0 |
| exempl ary embodi ment3 | | | | 1 | 1.0 | 1.1 | 0.2 | 2 | 2.5 |
| exempl ary embodi ment4 | | | | | 1.2 | 0.9 | 0.1 | 5 | 3.8 |
| exempl ary embodi ment5 | | | | 2 | 1.6 | 1.2 | 0.0 | 2 | 1.8 |
| exempl ary embodi ment6 | | | | | 2.2 | 0.8 | 0.1 | 5 | 3.4 |
| Compar ative Exampl e1 | | | 3-Glycidoxypr opyltrimethoxysi lane | 1 | 4.1 | 0.1 | 0.1 | 2 | 1.4 |
| Compar ative Exampl e2 | | | | 3.8 | 0.0 | 0.2 | 5 | 2.2 | |
| Compar ative Exampl e3 | | | 3-Methacrylo xypropyl trimethoxysi lane | 1 | 3.2 | 0.2 | 0.1 | 2 | 1.5 |
| Compar ative Exampl e4 | | | | | 5.2 | 0.1 | 0.1 | 5 | 2.1 |
| Compar ative Exampl e5 | | | - | - | 4.5 | 0.0 | 0.0 | 2 | 1.5 |
| Compar ative Exampl e6 | | | - | - | 3.5 | 0.0 | 0.1 | 5 | 2.2 |

As can be seen from the results in Table 1 above, it could be confirmed that in the case of Examples 1 to 6 using 3-aminopropyltrimethoxysilane, which is an aminosilane coupling agent including Si-N bonds, the T-peel adhesion was excellent compared to Comparative Examples 1 to 6. This is because aminosilane components of 3-aminopropyl trimethoxysilane may form a hard bond with Si in the electrical steel sheet, thereby causing a part of Si in the electrical steel sheet to migrate to the second interface layer. As a result, the Si concentration in the second interface layer is shown to be high.

In addition, it could be confirmed that when the Si content included in the first interface layer is compared with that of the second interface layer between Examples 1 to 6 and Comparative Examples 1 to 6, in the case of Examples 1 to 6, the Si present in the first interface layer migrated to the second interface layer.

However, when the silane coupling agent is included in an excessively large amount, the stability of the bonding composition solution may deteriorate during the preparation step and partial precipitation may occur, and the partial precipitation may act as a factor that interferes with the initiation of the crosslinking reaction of the silane coupling agent during the formation of the coating layer.

The present invention is not limited to the Examples, but may be prepared in various forms, and a person with ordinary skill in the art to which the present invention pertains will understand that the present invention can be implemented in another specific form without changing the technical spirit or essential feature of the present invention. Therefore, it should be understood that the above-described Examples are illustrative only in all aspects and are not restrictive.

**[Explanation of Reference Numerals and Symbols]**

| | | | |
|---|---|---|---|
| 10 | Electrical steel sheet | 20 | Laminate |
| 100 | Electrical steel sheet | 101 | First interface |
| 200 | Bonding coating layer | 201 | Second interface |
| 210 | Bonding layer | | |

## Claims

1. An electrical steel sheet comprising: an electrical steel sheet; and
a bonding coating layer positioned on the electrical steel sheet, and
further comprising a first interface layer positioned in the electrical steel sheet and brought into contact with the bonding coating layer; and
a second interface layer positioned in the electrical steel sheet and brought into contact with the first interface layer,
wherein 70 mol% or more of total Si content in the bonding coating layer comprising the second interface layer is present in the second interface layer.

2. The electrical steel sheet of claim 1,
wherein the first interface layer comprises:
90 wt% to 97 wt% of Fe oxides,
2 wt% to 6 wt% of Si oxides, and
1 wt% to 4 wt% of segregation elements.

3. The electrical steel sheet of claim 1,
wherein the Fe oxide content in the first interface layer is reduced by 1 wt% to 3 wt% compared to a content before the bonding coating layer is formed,
the Si oxide content in the first interface layer is reduced by 0.5 wt% to 1 wt% compared to a content before the bonding coating layer is formed, and
the segregation element content in the first interface layer is reduced by 0.5 wt% to 1 wt% compared to a content before the bonding coating layer is formed.

4. The electrical steel sheet of claim 1,
wherein 70 mol% or more of the total content of Si-N bonds in the bonding coating layer comprising the second interface layer is present in the second interface layer.

5. The electrical steel sheet of claim 1,
wherein the bonding coating layer comprises an adhesive resin and a bonding additive, and
the adhesive resin is a polyurethane formed by reacting a diisocyanate monomer and a polyol.

6. The electrical steel sheet of claim 5,
wherein the bonding additive is one or more selected from the group consisting of a coupling agent, a wetting agent, a curing agent, and a curing catalyst.

7. The electrical steel sheet of claim 6,
wherein the coupling agent is included in an amount of 0.5 parts by weight or more and 5 parts by weight or less with respect to 100 parts by weight of the adhesive resin in the bonding coating layer.

8. The electrical steel sheet of claim 6,
wherein the coupling agent is a coupling agent comprising an aminosilane represented by the following Chemical Formula 1: 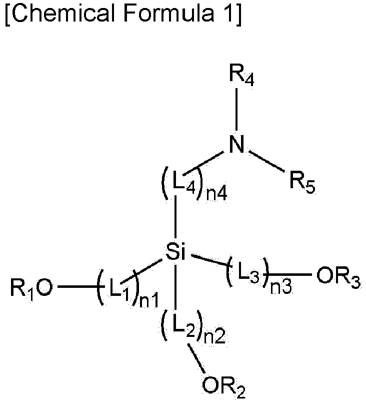 in Chemical Formula 1, R1 to R5 are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group, L1 to L4 are each independently a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and n1 to n4 are each independently any one integer from 0 to 10.

9. The electrical steel sheet of claim 5,
wherein the diisocyanate monomer is one or more selected from the group consisting of an aromatic diisocyanate monomer and an aliphatic diisocyanate monomer.

10. The electrical steel sheet of claim 9,
wherein the aromatic diisocyanate monomer is the following Chemical Formula 2, Chemical Formula 3, or a combination thereof: 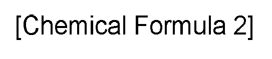 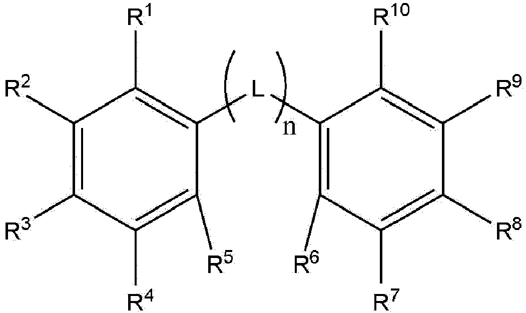 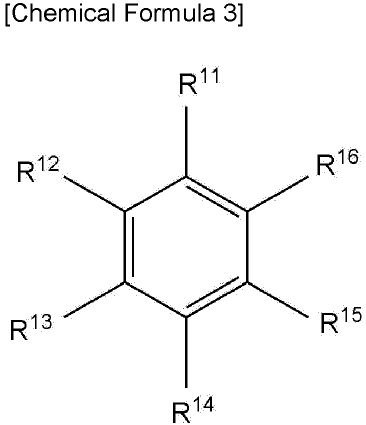 in Chemical Formula 2,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is an isocyanate, and any one of R⁶ to R¹⁰ is an isocyanate,
the case where both R³ and R⁸ are isocyanate is excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any one integer of 1 to 10,
in Chemical Formula 3,
R¹¹ to R¹⁶ are each independently hydrogen, deuterium, a substituted or unsubstituted C1 to C10 alkyl group, a substituted or unsubstituted C6 to C20 aryl group, or a substituted or unsubstituted C5 to C20 heteroaryl group, an isocyanate group or a substituted or unsubstituted C1 to C10 alkyl isocyanate group, and at least two of R¹¹ to R¹⁶ are an isocyanate or a substituted or unsubstituted C1 to C10 alkyl isocyanate.

11. The electrical steel sheet of claim 9,
wherein the aliphatic diisocyanate monomer is the following Chemical Formula 4: 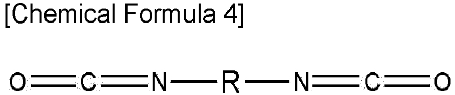 in Chemical Formula 4,
R is a substituted or unsubstituted C1 to C10 alkyl group, or a substituted or unsubstituted C3 to C12 cycloalkyl group.

12. A laminate comprising: a plurality of electrical steel sheets; and
a bonding layer positioned between the plurality of the electrical steel sheets, and
further comprising: a first interface layer positioned in the electrical steel sheet and brought into contact with the bonding layer; and a second interface layer positioned in the bonding layer and brought into contact with the first interface layer,
wherein 70 mol% or more of total Si content in the bonding layer comprising the second interface layer is present in the second interface layer.
